# EUROPÄISCHE PATENTSCHRIFT

(11) **EP 1 710 481 B1**
(45) Veröffentlichungstag und Bekanntmachung des Hinweises auf die Patenterteilung: **07.07.2010**
(21) Anmeldenummer: 06003117.6
(22) Anmeldetag: 16.02.2006
(51) Int. Cl.: F16K 41/12, F16K 7/12

(54) **Membranventil**
Diaphragm valve
Soupape à membrane

(30) Priorität: 09.04.2005 DE 102005016387
(43) Veröffentlichungstag der Anmeldung: 11.10.2006
(73) Patentinhaber: APV ROSISTA GMBH, 59425 Unna (DE)
(72) Erfinder: Schulz, Dieter, 44894 Bochum (DE); Baumbach, Frank, Dipl.-Ing., 59494 Soest (DE)
(74) Vertreter: Andrae, Steffen

(56) Entgegenhaltungen:
- EP-A- 1 413 812
- GB-A- 319 936
- GB-A- 319 961

## Beschreibung

Die Erfindung bezieht sich auf ein Membranventil mit einem Steuerraum, einer beweglichen Ventilstange, einem Produktraum und einer Membrane, die in einem Ventilgehäuse dichtend gelagert ist und den Steuerraum und gegebenenfalls auch die bewegliche Ventilstange von dem Produktraum trennt, sowie mit einer Stützeinrichtung zur Abstützung der eingesetzten Membrane gemäß Oberbegriff des Anspruchs 1.

Derartige Membranventile zählen zum Beispiel zu den pneumatisch gesteuerten Druckregelventilen bzw. Druckhalteventilen zur Konstanthaltung von Prozessdrücken in verfahrenstechnischen Anlagen, beispielsweise der Lebensmittel- und/oder Getränkeindustrie sowie der pharmazeutischen und chemischen Industrie. Das Wirkungsprinzip der Druckkonstanthaltung beruht auf dem Verkleinern oder Vergrößern des freien Strömungsquerschnittes am Ventilsitz durch den verstellbaren Ventilschaft, der mit der Regelmembrane verbunden ist. Ferner werden derartige Membranventile zur allgemeinen Ansteuerung von Produktströmen eingesetzt. Als Abdichtung zwischen dem in der Rohrleitung eingebundenen Ventilgehäuse und der beweglichen Schaftstange werden dünne Tellermembranen aus PTFE eingesetzt. Diese Tellermembranen haben eine äußere und innere Einspannung oder nur eine äußere Einspannung und sind innen einstückig mit dem Schaft verbunden. Die Tellermembranen müssen einerseits dünn und flexibel sein, um der Bewegung der Schaftstange problemlos folgen zu können und andererseits müssen sie den Produkt-Druckkräften standhalten. Der Produktdruck führt zu einer ständigen Dehnung der Membrane im drucktragenden Bereich und führt schließlich zu einem Membranbruch. Ferner wirken Zugkräfte auf die innere und äußere Membraneinspannung ein, die die Dichtheit und Lebensdauer negativ beeinflussen. In realen Installationen treten insbesondere während der Inbetriebnahme auch häufig Druckspitzen durch Mängel in der Prozessführung auf. Bei höheren Temperaturen, z. B. bei der Dampfsterilisation, hat das Membranmaterial eine geringere Festigkeit. Zur Entlastung der Tellermembrane sind Membranunterstützungen auf der dem Druck abgewandten Seite bekannt, wie Gummi mit Gewebeeinlage anvulkanisiert oder innen und außen gehaltene bewegliche Metallsegmente.

Bei bekannten Steuerventilen stellt die Ausgestaltung der Membranwand ein Problem dar. Aus verschiedenen Gründen muss diese Membranwand oft einen wesentlich größeren Durchmesser besitzen als der Teil des verschieblichen Ventilkörpers, der an der Membranwand befestigt ist. Dies macht es schwierig, eine hohe Regelgenauigkeit zu erzielen. Genauer gesagt, besteht ein Problem darin, dass die Membranwand gleichzeitig zwei verschiedene Eigenschaften, nämlich einerseits eine mechanische Festigkeit und andererseits eine Flexibilität im Hinblick auf kleine Druckschwankungen zwischen den auf den gegenüberliegenden Seiten der Membranwand vorherrschenden Drücken, aufweisen muss.

Ein weiteres Problem tritt auf, wenn die Membranwand mit einem Prozessfluid in Kontakt stehen soll. Es bestehen dann nämlich Anforderungen im Hinblick auf einen hygienischen Aufbau der Membranwand und des gesamten Steuerventils, was bedeutet, dass die dem Prozessfluid zugewandte Seite des Steuerventils keine Räume aufweisen darf, die für ein Reinigungsfluid schwer zugänglich sind. Außerdem darf praktisch keine Gefahr in Bezug auf ein Ausströmen bzw. Ausfließen des Prozess- oder Steuerfluids durch die Bereiche der Membranwand bestehen, in denen diese an dem Ventilgehäuse und an dem Ventilkörper befestigt ist. Dies gilt insbesondere bei dem Einsatz der Steuerventile in der Lebensmittelindustrie.

Aus der US 3 182 678 geht ein Steuerventil hervor, bei dem die aus zwei Membranteilen bestehende Membranwand eine zwischen den Membranteilen angeordnete Stützeinrichtung aufweist. Diese Stützeinrichtung hat die Form einer Scheibe, die sich, ausgehend vom zentralen Teil der Membranteile, eine vorgegebene Strecke in radialer Richtung nach außen erstreckt. Bei dem Einsatz einer derartigen Stützeinrichtung ist die Beanspruchung der Membranteile bei der Bewegung des Ventilkörpers so groß, dass das gesamte Ventil nur eine vergleichsweise geringe Lebensdauer aufweist. Aus der DE 458 931 C2 geht ein Steuerventil hervor, bei dem die Membranwand aus einem einzigen Membranteil besteht, an dessen eine Seite eine Stützeinrichtung in der Form einer mit radial verlaufenden Schlitzen versehenen Scheibe angeordnet ist, die praktisch die gesamte freiliegende Fläche der einen Seite des Membranteils überdeckt. Beim Betrieb dieses Steuerventiles wird das scheibenförmige Stützelement durch die Relativbewegungen zwischen dem Ventilkörper und dem Ventilgehäuse konisch verformt. Dies führt dazu, dass die äußeren Enden der Membranteile, die über den äußeren Umfang des scheibenförmigen Stützelementes hinausragen und in dem Ventilgehäuse eingeklemmt sind, in axialer Richtung relativ stark belastet werden. Bei der Verwendung eines diesbezüglichen dünnen Membranteiles ist die Lebensdauer relativ gering.

Aus der DE 28 18 633 C2 ist ein Steuerventil mit einer Membranwand bekannt geworden, die dichtend in einem Ventilgehäuse eingeklemmt ist, in dem sie zwei Kammern voneinander trennt, die mit unterschiedlichen Drücken beaufschlagbar sind und mit einem Ventilkörper, der an einem zentralen Bereich der Membranwand befestigt und unter Einwirkung auf einen Ventilsitz in axialer Richtung durch die Membranwand bewegbar ist, wobei die Membranwand zwei separate Membranteile ausweist, von denen jeweils eines auf einer Seite der Membranwand angeordnet und einer entsprechenden Kammer zugewandt ist, und zwischen den Membranteilen eine Stützeinrichtung vorgesehen ist, wobei die Stützeinrichtung aus einer Anzahl von voneinander getrennten steifen Stützelementen besteht, deren eine Enden jeweils verschwenkbar mit dem Ventilkörper verbunden sind.

Die EP 1 413 812 A2 offenbart ein Membranventil gemäß dem Oberbegriff von Anspruch 1. Die Fächerscheibe 20 ist unlösbar in dem Ventilgehäuse gelagert. Die radiale Schaftstangenführung erfolgt mittels einer Führungsbuchse.

Aus der GB 533 116 ist die Ausgestaltung der Lagerung einer Ventilspindel durch einen Membranunterstützungsteil bekannt geworden.

Die DE 695 08 865 T2 beschreibt die Ausgestaltung eines lösbaren, dichtenden Membranunterstützungs- und Spindellagerringes.

Ferner zeigen die GB 319 936 und GB 319 961 Membranunterstützungen, die mit der in eine Schließ- und Öffnungsstellung verdrehbaren Spindel verschraubt und mitführbar sind. Eine Ausgestaltung zur Lösung der der Erfindung zugrunde liegenden Aufgabe ist nicht entnehmbar.

Die der Erfindung zugrunde liegende Aufgabe besteht nun darin, ein Steuerventil oder Einsitzventil der eingangs genannten Art dahingehend zu verbessern, dass es auch im Sterilbereich einsetzbar und leicht zu reinigen und/oder sterilisierbar ist und gegenüber den bekannten Ventilausgestaltungen mit möglichst wenigen inneren Bauteilen ausgebildet sein soll.

Diese Aufgabe wird durch ein Membranventil gemäß Anspruch 1 gelöst. Vorteilhafte Ausbildungen der Erfindung sind in den abhängigen Ansprüchen angegeben.

Demnach besteht der Vorteil der erfindungsgemäßen Ausführung in der bekannten nahezu vollflächigen Unterstützung der Membrane während des gesamten Schaftbewegungsablaufes solcher Ventile bzw. bei deren Hubbewegung. Hinzu kommt eine äußerst einfache Bauweise mit entsprechend geringen Bauteilen sowie deren spezielle Zuordnung zueinander.

Im nachfolgenden wird die Erfindung anhand eines in der Zeichnung dargestellten Ausführungsbeispiels unter Bezugnahme auf einen in den Figuren 1-3 dargestellten allgemeinen Stand der Technik gemäß der EP 1 413 812 A2 näher erläutert.

In der Zeichnung zeigt:
Figur 1 einen Querschnitt durch ein als Druckhalteventil ausgebildetes bekanntes Membranventil,
Figur 2 einen Querschnitt durch ein bekanntes Einsitzventil
Figur 3 ein Ausführungsbeispiel einer vorteilhaften Stützeinrichtung zur Stabilisierung der eingebauten Membran als weiterer Stand der Technik und
Figur 4 die erfindungsgemäße Weiterbildung solcher Ventile, beispielsweise in Form eines Sterilventils.

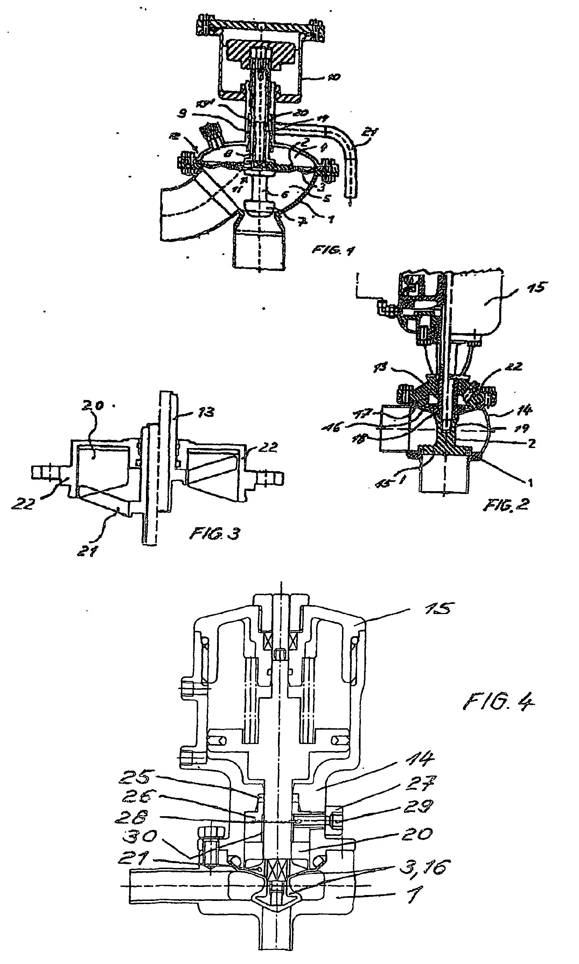

Gemäß dem in Figur 1 dargestellten Ausführungsbeispiel besteht das als Druckhalteventil ausgebildete Membranventil aus einem Ventilgehäuse 1, dessen Innenraum eine abdichtend eingespannte Doppelmembrane mit einer oberen Membrane 2 und einer unteren Membrane 3 aufweist. Diese Membranen 2,3 teilen das Ventilgehäuse 1 in einen oberen Steuerraum 4 und einen unteren Produktraum 5. In dem Produktraum 5 befindet sich ein unterer Ventilschaft 6 mit einem Steuerventil 7. Der obere Steuerraum 4 nimmt den oberen Ventilschaft 8 auf, der durch das Ventilgehäuse 1 durch eine Führung 9 zu einem zusätzlich verwendeten Booster 10 führt. Die Ventilschäfte 6, 6' weisen eine zentrale Einspannstelle 11 für die Membranen 2, 3 auf, die ihrerseits auf einer Spannplatte 11' aufgelegt sind. Der äußere Rand dieser Membranen 2, 3 ist in einer äußeren Einspannstelle 12 dichtend gehalten.

Ein weiteres Ventil, bei dem die noch zu beschreibende erfindungsgemäße Ausbildung vorteilhaft einsetzbar ist, zeigt Figur 2. Dieses Ventil ist als Einsitzventil mit beweglicher Schaftstange 13 ausgebildet, die von einem außerhalb des Ventilgehäuses 14 angeordneten Stellmotor 15 ansteuerbar ist und das Ventil 15' entsprechend schaltet. Als Abdichtung zwischen dem in einer Rohrleitung angeordneten Ventilgehäuse 14 und 10 der beweglichen Schaftstange 13 ist eine dünne Tellermembrane 16 vorgesehen. Solche Tellermembranen weisen eine äußere und innere Einspannstelle 17, 18 auf. Es sind auch Ausführungen solcher Membranen bekannt, die nur eine äußere Einspannstelle 17 aufweisen und innen einstückig mit dem Ventilschaft 19 verbunden sind.

In Figur 3 ist ein Ausführungsbeispiel einer Stützeinrichtung zur Stabilisierung der vorgesehenen Membrane 2, 3 bzw. 16 dargestellt, die aus fächerartig ineinanderbewegbaren Stützelementen 20, 21 besteht. Dabei ist ein erstes Stützelement als Fächerscheibe 20 im Deckel 22 des Ventilgehäuses abgestützt und das zweite Stützelement als Fächerschaft 21 auf der beweglichen Schaftstange 13 angeordnet.

Der Fächerschaft 21 ist mit seinen vorzugsweise sternförmig angeordneten Stegen 23 in die Fächerspalten 24 der Fächerscheibe 20 während der Schaltvorgänge hinein- und aus diesen hinaus bewegbar. Während der Schaltbewegungen der Schaftstange 13 durchdringen sich mindestens teilweise die Fächerspalte und Stege der Fächerscheibe 20 und des Fächerschaftes 21. Auf diese Weise wird eine optimale Unterstützungsebene für die Membrane 2,16 in allen Schalt- und Bewegungspositionen und -Ebenen, also während der gesamten Schafthübe, gebildet.

In Figur 4 ist nun die erfindungsgemäße Ausbildung eines solchen Einsitzventils, zum Beispiel als Sterilventil, näher dargestellt.

Demzufolge ist die stationär angeordnete Fächerscheibe 20 lösbar in dem Ventilgehäuse 1 gelagert und dient in der dargestellten Einsatzposition gleichzeitig als radiale untere Schaftstangenführung. Zusätzlich übernimmt diese Fächerscheibe 20 oder deren zugeordnete Halteteile als eigentliche Fächerhalterung 26 auch die höhenmäßige Festsetzung mindestens einer oberen Schaftdichtung 25. Es kann auch vorgesehen sein, dass mindestens eine Schaftdichtung 25 von der Fächerscheibe 20 oder einem gegen deren obere Stirnseite anlegbares Distanzelement in seiner axialen Bewegungsmöglichkeit arretiert ist. Zweckmäßig ist eine zusätzliche Fächerhalterung 26 zwischen der oberen Stirnseite der Fächerscheibe 20 und der zugeordneten Stirnseite der Schaftdichtung 25 vorgesehen.

Die Fächerhalterung 26 oder die Fächerscheibe 20 weist beispielsweise eine sich radial erstreckende und von außen verstellbare oder auch festsetzbare Befestigungseinrichtung 27 auf. Dabei hat es sich als zweckmäßig erwiesen, dass die Fächerhalterung 26 mittels einer Stellschraube 28 lösbar gehalten ist. Dieser die Fächerscheibe 20 und deren Halterung 26 aufnehmende Raum weist zusätzlich einen nach außen weisenden Leckagekanal 29 auf Dieser kann beispielsweise durch die vorgesehene Befestigungseinrichtung 27 oder die eingegliederte Stellschraube 28 nach außen geführt sein. Mindestens im Bereich der Fächerhalterung 26 kann der Leckagekanal 29 auch als umlaufender Ringkanal 30 ausgeführt sein. Aufgrund der Zuordnung verschiedener Aufgaben für die miteinander korrespondierenden Bauteile ist eine besonders vorteilhafte und einfache Ventilausbildung gegeben.

## Patentansprüche

1. Membranventil mit einem Steuerraum (4), einer beweglichen Ventilstange (13), einem Produktraum (5) und einer Membrane (3), die in einem Ventilgehäuse (1) dichtend gelagert ist und den Steuerraum (4) und gegebenenfalls auch die bewegliche Ventilstange (13) von dem Produktraum (5) trennt, sowie mit einer eine stationäre Fächerscheibe (20) umfassende fächerartigen Stützeinrichtung zur Stabilisierung und Abstützung der eingesetzten Membrane (3), **dadurch gekennzeichnet, dass** die stationäre Fächerscheibe (20) lösbar in dem Ventilgehäuse (1) gelagert ist und gleichzeitig als radiale Ventilstangenführung ausgebildet ist.

2. Membranventil nach Anspruch 1, **dadurch gekenntzeichnet, dass** mindestens eine zu einem Stellantrieb (15) weisende Schaftdichtung (25) mittels der Fächerscheibe (20) und/oder deren Halteteilen feststellbar ist.

3. Membranventil nach einem der vorhergehenden Ansprüche, **dadurch gekennzeichnet, dass** mindestens eine Schaftdichtung (25) von der Fächerscheibe (20) oder von einem gegen deren obere Stirnseite anlegbares Distanzelement in ihrer axialen Dichtebene arretiert ist.

4. Membranventil nach einem der vorhergehenden Ansprüche, **dadurch gekennzeichnet, dass** eine zusätzliche Fächerhalterung (26) zwischen der oberen Stirnseite der Fächerscheibe (20) und einer Schaftdichtung (25) vorgesehen ist.

5. Membranventil nach Anspruch 4, **dadurch gekennzeichnet, dass** die Fächerhalterung (26) mittels einer sich radial erstreckenden und von außen verstellbaren und/oder festsetzbaren Befestigungseinrichtung (27) gehalten ist.

6. Membranventil nach Anspruch 4 oder 5, **dadurch gekennzeichnet, dass** die Fächerhalterung (26) mittels einer Feststellschraube (28) lösbar gehalten ist.

7. Membranventil nach einem der Ansprüche 4 bis 6, **dadurch gekennzeichnet, dass** die Fächerhalterung (26) mindestens einen nach außen weisenden Leckagekanal (29) aufweist.

8. Membranventil nach einem der Ansprüche 4 bis 7, **dadurch gekennzeichnet, dass** die Fächerhalterung (26) mindestens einen oberhalb der Fächerscheibenstirnseite beginnenden Leckagekanal (29) aufweist.

9. Membranventil nach Anspruch 7 oder 8, **dadurch gekennzeichnet, dass** der Leckagekanal (29) mindestens im Bereich der Fächerhalterung (26) als umlaufender Ringkanal (30) ausgebildet ist.

10. Membranventil nach einem der Ansprüche 4 bis 9, **dadurch gekennzeichnet, dass** die Fächerhaltung (26) von einer einen nach außen führenden Leckagekanal (29) aufweisenden Feststellschraube (28) lösbar gehalten ist.

11. Membranventil nach einem der vorhergehenden Ansprüche, **dadurch gekennzeichnet, dass** die miteinander korrespondierenden und zueinander gleitende Fächerscheibe (20) und Ventilstange (13) aus Kunststoff und/oder Feinguss gebildet sind.

12. Membranventil nach einem der vorhergehenden Ansprüche, **dadurch gekennzeichnet, dass** die Fächerscheibe (20) mittels einer sich radial erstreckenden und von außen verstellbaren und/oder festsetzbaren Befestigungseinrichtung (27) gehalten ist.

13. Membranventil nach einem der vorhergehenden Ansprüche, **dadurch gekennzeichnet, dass** die Fächerscheibe (20) mittels einer Feststellschraube (28) lösbar gehalten ist.

14. Membranventil nach einem der vorhergehende Ansprüche, **dadurch gekennzeichnet, dass** die Fächerscheibe (20) mindestens einen nach außen weisenden Leckagekanal (29) aufweist.

15. Membranventil nach einem der vorhergehenden Ansprüche, **dadurch gekennzeichnet, dass** die Fächerscheibe (20) von einer einen nach außen führenden Leckagekanal (29) aufweisenden Feststellschraube (28) lösbar gehalten ist.

## Claims

1. Membrane valve with a control chamber (4), a movable valve rod (13), a production chamber (5) and a membrane (3) which is mounted in a sealed manner in a valve housing (1) and separates the control chamber (4) and optionally also the movable valve rod (13) from the product chamber (5) as well as with a serrated support device comprising a stationary serrated lock washer (20) for the stabilization and support of the inserted membrane (3), **characterised in that** the stationary serrated lock washer (20) is detachably mounted in the valve housing (1) and is simultaneously realized in the form of a radial valve rod guide.

2. Membrane valve according to claim 1, **characterised in that** at least one stem seal (25) facing to an actuator drive (15) is fixable in position by means of the serrated lock washer (20) and/or its supporting parts.

3. Membrane valve according to any of the preceding claims, **characterised in that** at least one stem seal (25) is locked in its axial sealing plane by the serrated lock washer (20) or by a spacer element that can be inserted against its upper end surface.

4. Membrane valve according to any of the preceding claims, **characterised in that** an additional serration holder (26) is provided between the upper end surface of the serrated lock washer (20) and a stem seal (25).

5. Membrane valve according to claim 4, **characterised in that** the serration holder (26) is held in place by means of a fastening device (27) that extends radially and can be adjusted and/or fixed in position externally.

6. Membrane valve according to claim 4 or 5, **characterised in that** the serration holder (26) is detachably held in place by means of a set screw (28).

7. Membrane valve according to any of claims 4 to 6, **characterised in that** the serration holder (26) has at least one outwardly leading leakage channel (29).

8. Membrane valve according to any of claims 4 to 7, **characterised in that** the serration holder (26) has at least one leakage channel (29) that begins above the end surface of the serrated lock washer.

9. Membrane valve according to claim 7 or 8, **characterised in that** the leakage channel (29) is realized, at least in the vicinity of the serration holder (26), in the form of an encircling ring channel (30).

10. Membrane valve according to any of claims 4 to 9, **characterised in that** the serration holder (26) is detachably held by a set screw (28) that has a leakage channel (29) that leads to the outside.

11. Membrane valve according to any of preceding claims, **characterised in that** the serrated lock washer (20) and valve rod (13) that correspond to each other and slide in relation to each other are made of plastic and/or by precision casting.

12. Membrane valve according to any of the preceding claims, **characterised in that** the serrated lock washer (20) is held in place by means of a fastening device (27) that extends radially and can be adjusted and/or fixed in position externally.

13. Membrane valve according to any of the preceding claims, **characterised in that** the serrated lock washer (20) is detachably held in place by means of a set screw (28).

14. Membrane valve according to any of the preceding claims, **characterised in that** the serrated lock washer (20) has at least one outwardly leading leakage channel (29).

15. Membrane valve according to any of the preceding claims, **characterised in that** the serrated lock washer (20) is detachably held by a set screw (28) that has a leakage channel (29) that leads to the outside.

## Revendications

1. Soupape à membrane comprenant une chambre de commande (4), une tige de soupape mobile (13), une chambre à produit (5) et une membrane (3), laquelle est montée de façon à assurer un étanchement dans un boîtier de soupape et sépare la chambre de commande (4) et le cas échéant également la tige de soupape mobile (13) vis-à-vis de la chambre à produit (5), et un dispositif de soutien de type éventail qui comprend une plaque en éventail stationnaire (20), pour stabiliser et soutenir la membrane mise en place (3), **caractérisée en ce que** la plaque en éventail stationnaire (20) est montée de façon détachable dans le boîtier de soupape (1) et est simultanément réalisée comme guidage radial pour la tige de soupape.

2. Soupape à membrane selon la revendication 1, **caractérisée en ce qu'**au moins un joint d'arbre (25), dirigé vers un entraînement de positionnement (15), est susceptible d'être immobilisé au moyen de la plaque en éventail (20) et/ou de ses pièces de maintien.

3. Soupape à membrane selon l'une des revendications précédentes, **caractérisée en ce qu'**au moins un joint d'arbre (25) est arrêté dans son plan d'étanchement axial par la plaque en éventail (20) ou par un élément d'écartement susceptible d'être appliqué sur sa face frontale supérieure.

4. Soupape à membrane selon l'une des revendications précédentes, **caractérisée en ce qu'**il est prévu un maintien en éventail supplémentaire (26) entre la face frontale supérieure de la plaque en éventail (20) et un joint d'arbre (25).

5. Soupape à membrane selon la revendication 4, **caractérisée en ce que** le maintien en éventail (26) est tenue à l'aide d'un moyen de fixation (27) qui s'étend radialement et qui est réglable et/ou immobilisable de l'extérieur.

6. Soupape à membrane selon la revendication 4 ou 5, **caractérisée en ce que** le maintien en éventail (26) est maintenu de façon détachable au moyen d'une vis d'immobilisation (28).

7. Soupape à membrane selon l'une des revendications 4 à 6, **caractérisée en ce que** le maintien en éventail (26) comprend au moins un canal de fuite (29) dirigé vers l'extérieur.

8. Soupape à membrane selon l'une des revendications 4 à 7, **caractérisée en ce que** le maintien en éventail (26) comprend au moins un canal de fuite (29) qui commence au-dessus de la face frontale de la plaque en éventail.

9. Soupape à membrane selon la revendication 7 ou 8, **caractérisée en ce que** le canal de fuite (29) est réalisé comme un canal annulaire périphérique (30) au moins dans la région du maintien en éventail (26).

10. Soupape à membrane selon l'une des revendications 4 à 9, **caractérisée en ce que** le maintien en éventail (26) est maintenu de façon détachable au moyen d'une vis d'immobilisation (28) qui comporte le canal de fuite (29) menant vers l'extérieur.

11. Soupape à membrane selon l'une des revendications précédentes, **caractérisée en ce que** la plaque en éventail (20) et la tige de soupape (13) mutuellement correspondantes et en coulissement l'une par rapport à l'autre sont réalisées en matière plastique et/ou en fonte fine.

12. Soupape à membrane selon l'une des revendications précédentes, **caractérisée en ce que** la plaque en éventail (20) est maintenue à l'aide d'un moyen de fixation (27) qui s'étend radialement et qui est réglable et/ou immobilisable de l'extérieur.

13. Soupape à membrane selon l'une des revendications précédentes, **caractérisée en ce que** la plaque en éventail (20) est maintenue de façon détachable au moyen d'une vis d'immobilisation (28).

14. Soupape à membrane selon l'une des revendications précédentes, **caractérisée en ce que** la plaque en éventail (20) comporte au moins un canal de fuite (29) dirigé vers l'extérieur.

15. Soupape à membrane selon l'une des revendications précédentes, **caractérisée en ce que** la plaque en éventail (20) est maintenue de façon détachable par une vis d'immobilisation (28) qui présente un canal de fuite (29) menant vers l'extérieur.
